# FASCICULE DE BREVET EUROPEEN

(11) **EP 0 596 776 B1**
(45) Date de publication et mention de la délivrance du brevet: **08.07.1998**
(21) Numéro de dépôt: 93402644.4
(22) Date de dépôt: 28.10.1993
(51) Int. Cl.: H04Q 1/14, H01R 9/26

(54) **Réglette à contacts avec étiquetage adaptable**
Kontaktleiste mit anpassbarer Etikettierung
Contact bank with adaptable labelling

(30) Priorité: 02.11.1992 FR 9213108
(43) Date de publication de la demande: 11.05.1994
(73) Titulaire: INFRA + Société anonyme dite:, F-94240 L'Hay les Roses (FR)
(72) Inventeur: Laveissière, Gilles, F-92400 Courbevoie (FR)
(74) Mandataire: Pinguet, André

(56) Documents cités:
- DE-A- 3 615 824
- DE-C- 3 324 652
- DE-C- 3 929 905
- FR-A- 2 665 044

## Description

La présente invention concerne une réglette à contacts avec étiquetage adaptable.

En particulier, l'invention concerne une réglette à contacts du type tête de câble, que l'on trouve couramment dans les répartiteurs téléphoniques, bureautiques ou domestiques. Un telle réglette comporte au moins une rangée de contacts qui sont connectés, d'une part aux conducteurs d'un câble, et d'autre part à des jarretières comme il est bien connu. Le document EP-0 133 824 illustre par exemple de telles réglettes à contacts.

Comme les répartiteurs susmentionnés peuvent comprendre un grand nombre de réglettes à contacts, il est souhaitable d'étiqueter les réglettes pour les repérer. Les réglettes sont habituellement juxtaposées le long d'un rail de fixation et disposées de telle façon que seule est bien visible leur face avant, sur laquelle sont disposés les contacts, de sorte que dans l'art antérieur, les réglettes étaient repérées au moyen d'étiquettes portées par un porte-étiquette encliqueté sur la face avant de la réglette, devant les contacts.

Un problème technique qui se pose alors, est que ce porte-étiquette n'est compatible qu'avec le branchement de conducteurs individuels sur les différents contacts de la réglette, mais incompatible avec le branchement de connecteurs sur un ou plusieurs contacts car les connecteurs sont trop encombants. Par conséquent, si la réglette à contacts est reliée à des jarretières ayant des connecteurs qui se branchent sur les contacts de la réglette, la réglette ne peut plus être étiquetée, ce qui est gênant.

La demande de brevet PCT n°. WO-A-8 503 800 divulgue un dispositif de marquage ainsi qu'un composant électrique apte à recevoir ledit dispositif de marquage sur ses faces latérales inclinées. Le dispositif de marquage décrit consiste en une pièce de résine élastique sensiblement en forme de U destinée à être encliquetée soit sur un câble, soit sur ou entre des nervures spécialement prévues sur lesdites faces latérales inclinées du connecteur électrique. Le marquage consiste en des symboles tels que des lettres ou des chiffres visibles sur la partie centrale du U reliant les deux branches. Sur chaque face latérale inclinée du connecteur électrique peut être encliquetée une série de dispositifs de marquage amovibles de façon à constituer une inscription ou une référence. Chaque pièce de résine élastique est fabriquée par extrusion, puis marquée avec un symbole (chiffre ou lettre). Pour constituer une référence, il est donc nécessaire d'être pourvu d'une grande variété de symboles. Il faut rechercher chaque pièce adéquate une à une et l'enclipser sur le composant électrique. L'opération est longue et si, par malchance, un type de symbole vient à manquer, la référence n'est plus réalisable. De plus, il y a toujours un risque à ce qu'une pièce ou plusieurs puissent se désolidariser de leur support, rendant ainsi la référence illisible.

Selon l'invention, les inconvénients susmentionnés sont résolus par une réglette à contacts, ayant deux côtés de forme générale plane sensiblement rectangulaire, deux faces latérales, une face avant et une face arrière, ladite réglette à contacts étant adaptée à être fixée à un rail par ladite face arrière, lesdits côtés étant perpendiculaires à la direction longitudinale du rail, ladite face avant comportant des contacts électriques, ladite réglette à contact comportant un porte-étiquette latéral s'étendant sur une face latérale et faisant un angle obtu avec la face avant pour qu'une étiquette portée par ledit porte-étiquette soit visible depuis la face avant de la réglette à contact, caractérisée en ce que le porte-étiquette latéral comporte des moyens d'encliquetage à une de ses extrémités coopérant avec un organe d'encliquetage prévu sur la face avant à une de ses extrémités à proximité de la face latérale pour monter de façon amovible ledit porte-étiquette sur la réglette.

Un autre problème technique est de permettre l'accès la face latérale de la réglette qui comporte le porte-étiquette latéral, par exemple pour connecter à la terre un drain d'écran de câble, comme illustré par exemple dans le document FR-A-2 650 709, et ce sans avoir à démonter le porte-étiquette latéral, qui risquerait alors de ne pas être ultérieurement remonté ou qui pourrait être interverti avec un autre porte-étiquette.

Selon une forme de réalisation, ce problème est résolu en ce que le porte-étiquette latéral recouvre sensiblement ladite face latérale, et ledit porte-étiquette latéral est monté rotatif autour d'un axe voisin de la face avant de la réglette et perpendiculaire aux côtés de la réglette.

Un autre problème technique est de permettre le montage simultané du porte-étiquette latéral et d'un porte-étiquette frontal du type de celui de l'art antérieur, sans compliquer la réglette à contacts.

Selon une forme de réalisation de l'invention, ce problème est résolu en ce que la réglette à contacts comporte des organes d'encliquetage identiques aux deux extrémités de sa face avant à proximité des faces latérales, ladite réglette comporte en outre un porte-étiquette frontal qui recouvre la face avant de la réglette et qui est doté de moyens d'encliquetage coopérant avec un des organes d'encliquetage pour monter de façon amovible le porte-étiquette frontal sur la réglette.

Un autre problème technique est de permettre l'accès à la face avant de la réglette à contacts, par exemple pour connecter des conducteurs de jarretières sur les contacts électriques de la face avant, et ce sans démonter le porte-étiquette frontal, qui risquerait alors de ne pas être ultérieurement remonté ou qui pourait être interverti avec un autre porte-étiquette.

Selon une forme de réalisation de l'invention, ce problème technique est résolu en ce que les moyens d'encliquetage du porte-étiquette frontal coopèrent avec un des organes d'encliquetage pour monter rotatif le porte-étiquette frontal autour d'un axe perpendiculaire aux côtés de la réglette.

Selon une forme de réalisation, chaque organe d'encliquetage prévu à chaque extrémité de la face avant comporte deux bossages identiques ayant chacun la forme d'une plaque qui s'étend parallèlement aux côtés de la réglette, lesdits deux bossages formant un palier pour monter rotatif un porte-étiquette frontal ou latéral. Avantageusement, chaque bossage latéral est déformable élastiquement perpendiculairement aux côtés de la réglette, et comporte un perçage pour recevoir par encliquetage un pivot solidaire d'un porte-étiquette frontal ou latéral.

Un autre problème technique est de réaliser un porte-étiquette latéral qui soit commun à plusieurs réglettes.

Selon une forme de réalisation de l'invention, ce problème est résolu en ce que ledit porte-étiquette latéral est un profilé en forme générale de C, la réglette comporte un bossage latéral de forme complémentaire sur au moins une de ses deux faces latérales, au voisinage de la face avant, ledit porte-étiquette latéral est encliqueté sur ledit bossage latéral et s'étend perpendiculairement aux côtés de la réglette, jusqu'au delà d'au moins un desdits côtés. Avantageusement, ledit bossage latéral comporte une rainure perpendiculaire aux côtés de la réglette, et ledit porte-étiquette latéral comporte une nervure complémentaire encliquetée dans ladite rainure.

D'autres caractéristiques et avantages apparaîtront au cours de la description suivant d'une forme de réalisation particulière de l'invention, donnée à titre d'exemple non limitatif, en regard des dessins joints.

Sur les dessins :
- la figure 1 est une vue en élévation d'une réglette à contacts de l'art antérieur,
- la figure 2 est une vue en perspective d'une réglette à contacts selon l'invention,
- les figures 3 et 4 sont des vues en élévation de deux pièces constitutives de la réglette à contacts selon l'invention,
- la figure 5 est une vue en perspective d'une réglette à contacts selon l'invention,
- la figure 6 est une vue en perspective d'un premier porte-étiquette latéral pouvant être adapté sur la réglette à contacts de l'invention
- la figure 7 est une vue de dessous d'un deuxième exemple de porte-étiquette latéral pouvant être adapté sur la réglette à contacts de l'invention,
- la figure 8 est une vue en coupe selon la ligne 8-8 de la figure 7,
- la figure 9 est une vue de dessous d'un porte-étiquette frontal pouvant être adapté sur la réglette à contacts de la présente invention, et
- la figure 10 est une vue de côté du porte-étiquette frontal de la figure 9.

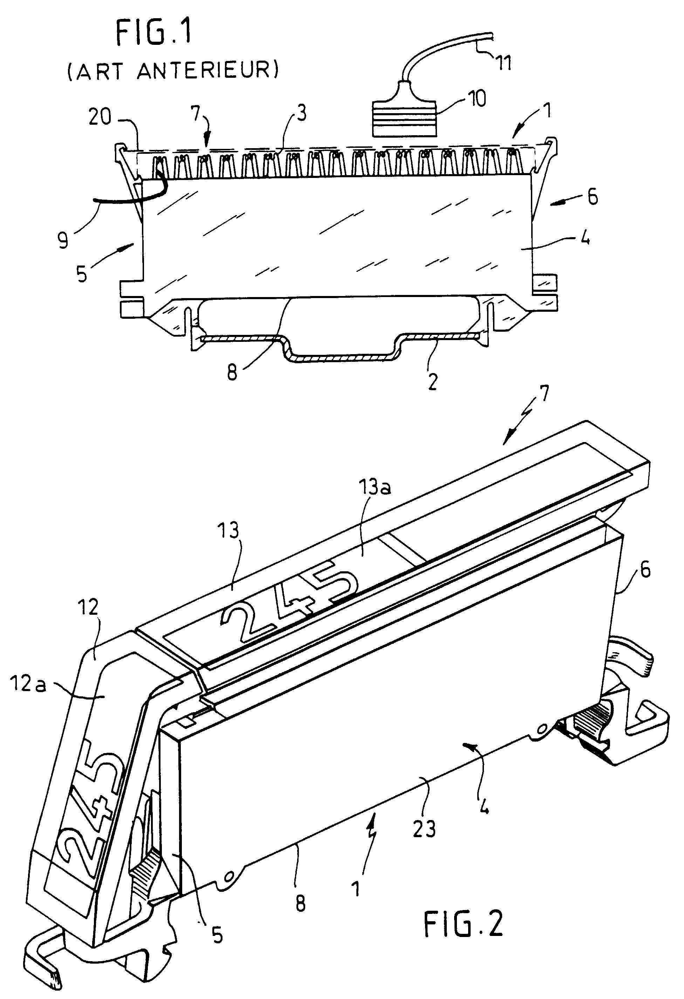

La figure 1 représente une réglette à contacts de type connu. La réglette présente deux côtés 4 de forme générale rectangulaire plane, deux faces latérales 5, 6, une face avant 7 et une face arrière 8. La réglette 1 est encliquetée par sa face arrière 8 sur un rail 2 généralement métallique, et elle comporte sur sa face avant une ou plusieurs rangées de contacts 3, qui sont généralement des contacts de type auto-dénudants, bien connus dans l'état de la technique, par exemple des contacts auto-dénudants doubles tels que divulgués dans le document FR-A-2 664 433. Les contacts auto-dénudants 3 sont connectés au conducteur d'un câble (non représenté) qui peut être un câble téléphonique, ou un câble de liaisons informatique ou autre. Les côtés 4 de la réglette 1 peuvent avantageusement être consitués pas des flasques dotés de canaux de guidage intérieurs pour guider les différents conducteurs du câble. Par ailleurs, les contats auto-dénudants 3 sont connectés à des jarretières, c'est-à-dire à des conducteurs qui permettent de réaliser un brassage au sein d'un répartiteur téléphonique, informatique ou autre. Les jarretières peuvent être des conducteurs individuels 9, qui sont engagés individuellement dans les fentes des contacts auto-dénudant 3, mais les jarretières peuvent aussi être constituées par des câbles 11 terminés par une prise 10 qui s'enfiche sur les contacts auto-dénudant 3.

Dans un répartiteur téléphonique ou informatique, un grand nombre de réglettes 1 sont encliquetées les unes à côté des autres sur un ou plusieurs rails 2. Les réglettes sont généralement au contact ou au voisinage les unes des autres par leurs côtés 4. Du fait du grand nombre de réglettes au sein d'un répartiteur, il est nécessaire d'étiqueter les différentes réglettes pour pouvoir les repérer. Compte tenu de la disposition des réglettes, il est habituel de recouvrir la face avant 7 de la réglette par un porte-étiquette 20 encliqueté sur la réglette. Un tel porte-étiquette est compatible avec les conducteurs individuels 9 fixés sur les différents contacts auto-dénudants, mais n'est pas compatible avec une jarrretière constituée par un câble 11 et un connecteur 10, du fait de l'encombrement du connecteur et du câble. Ainsi, lorsqu'on utilise un connecteur 10 en face avant de la réglette, on est obligé d'enlever le porte-étiquette 20, de sorte que la réglette n'est plus repérée, ce qui est très gênant.

La figure 2 représente un réglette à contacts 1 selon la présente invention, qui a une forme générale similaire à celle de la figure 1, et qui ne sera pas décrite à nouveau en détail ici. Les références employées pour la figure 1 seront reprises pour la figure 2 et les figures suivantes, pour désigner des éléments identique ou similaires à ceux de la figure 1.

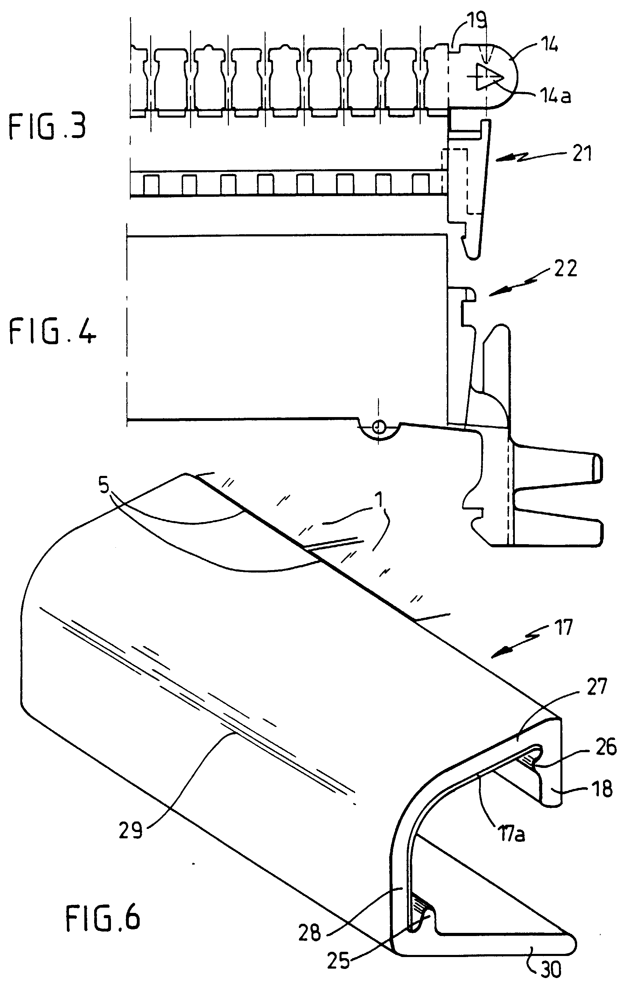

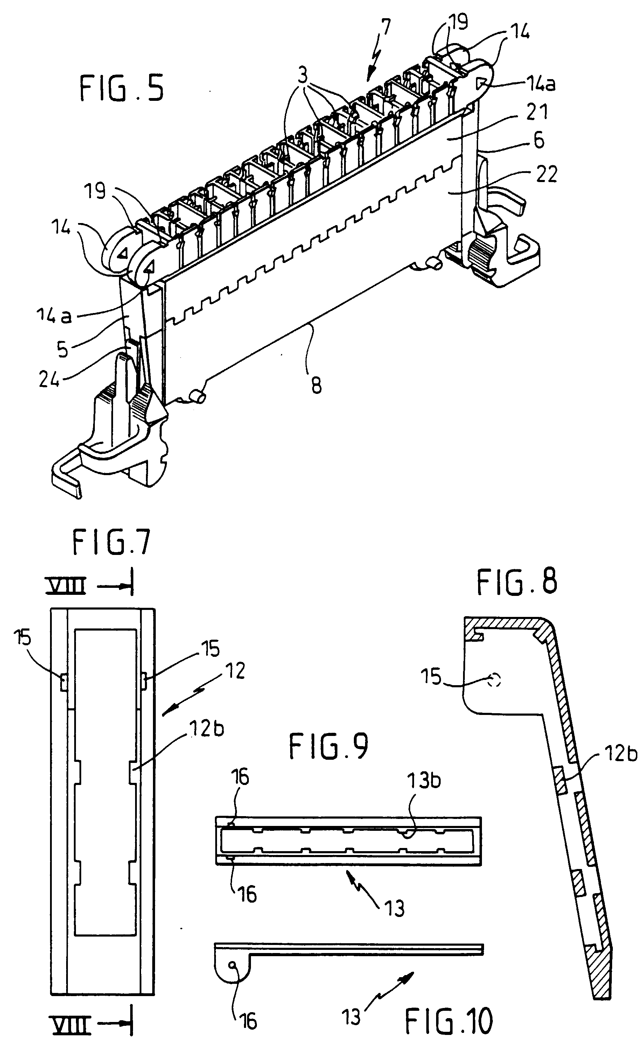

La réglette à contacts 1 comporte deux pièces centrales 21, 22 en matière plastique représentées sur les figures 3 et 4, et qui sont assemblés par encliquetage, comme représentée sur la figure 5. La réglette comporte en outre deux flasques latéraux 23 en matière plastique, représentés sur la figure 2, lesdits flasques latéraux 23 formant les côtés 4 de la réglette. De préférence, les flasques 23 comportent des canaux intérieurs de guidage (non représentés) pour guider les différents conducteurs d'un câble relié à la réglette 1. Comme on peut le voir sur la figure 5, la réglette comporte sur chacune de ses faces latérales 5, 6, un contact de terre 24 à fixation rapide, de préférence en forme de pince élastique, qui permet de connecter à la terre le drain d'écran d'un câble associé à la réglette 1. Le contact de terre 24 est généralement en contact électrique avec le rail 2, par exemple par une languette métallique saillant sur la face arrière 8 de la réglette (non représentée), ledit rail métallique 2 étant lui-même relié à la terre.

Chaque face latérale 5, 6 de la réglette comporte en outre, au voisinage de la face avant 7 de la réglette, deux bossages 14 qui saillent latéralement vers l'extérieur. Chaque bossage 14 est formé au voisinage d'un côté 4 de la réglette et a la forme d'une plaque parallèle audit côté 4 de la réglette. Chacun des bossages 14 comporte un perçage 14a perpendiculaire aux côtés 4 de la réglette, les perçages 14a des deux bossages 14 qui se trouvent sur la même face latérale de la réglette étant alignés. En outre, les bossages 14 présentent une certaine élasticité dans la direction perpendiculaire au côté 4 de la réglette. Enfin, les bossages 14 comportent chacun une encoche 19 au niveau de la face avant 7 de la réglette, ledites encoches 19 des deux bossages 14 d'une même face latérale de la réglette étant alignées perpendiculairement aux côtés 4 de la réglette.

La réglette 1 selon l'invention peut être dotée de différents porte-étiquettes. Tout d'abord, la réglettel peut être doté d'un porte-étiquette frontal 13, qui peut être réalisé en matière plastique transparente et qui contient une ou plusieurs étiquettes 13a. Comme représenté sur les figures 9 et 10, le porte-étiquette 13 comporte deux pivots 16 adaptés à s'encliqueter dans les perçages 14a de deux bossages 14 d'une des faces latérales de la réglette, par exemple la face latérale 6. Le porte-étiquette frontal 13 est ainsi monté rotatif sur les bossages 14, de façon à pouvoir dégager la face avant 7 de la réglette lorsqu'on doit y accéder, par exemple, pour fixer ou enlever un conducteur 9, ou pour tester un des contacts 3, sans pour cela devoir démonter le porte-étiquette frontal 13 de la réglette 1. Comme on peut le voir sur la figure 9, le porte-étiquette 13 comporte intérieurement des organes d'accrochage 13b permettant d'accrocher l'étiquette 13a. Le porte-étiquette 13 s'étend jusqu'au voisinage des bossages 14 de l'autre face latérale de la réglette, mais sans déborder sur lesdits bossages 14. Ainsi, les bossages 14 de l'autre face latérale peuvent accueillir un porte-étiquette latéral 12, ayant une étiquette 12a qui peut être semblable à l'étiquette 13a du porte-étiquette frontal. Le porte-étiquette 12 est réprésenté sur les figures 7 et 8, et comporte deux pivots 15 adaptés à s'encliqueter dans les perçages 14a des bossages de la face latérale 5 de la réglette. Le porte-étiquette 12 comporte en outre des organes d'accrochages 12b qui permettent de retenir l'étiquette 12a. En position normale, le porte-étiquette latéral 12 est incliné par rapport à la face latérale 5, de façon à s'écarter de ladite face latérale en s'éloignant de la face avant 7 de la réglette. Ainsi on peut facilement lire l'étiquette 12a en se trouvant devant la face avant 7 de la réglette. En outre, comme le porte-étiquette latéral 12 est monté rotatif dans les bossages 14, on peut faire tourner le porte-étiquette 12 autour de ses pivots 15, de façon à amener l'étiquette 12a dans une position parallèle à la face frontale 7 de la réglette, pour mieux lire ladite étiquette 12a. En outre, le montage rotatif du porte-étiquette latéral 12, qui peut s'étendre sensiblement sur toute la face latérale 5 de la réglette, permet de dégager le contact de terre 24 lorsqu'on doit y connecter un drain d'écran d'un câble. Lorsqu'on veut connecter sur les contacts 3 de la réglette un connecteur 10 associé à un câble 11, on peut soit relever le porte-étiquette 13 et le laisser en position relevée, soit enlever ledit porte-étiquette frontal 13, auquel cas la réglette 1 reste repérée grâce au porte-étiquette latéral 12.

Le porte-étiquette latéral 12 peut être remplacé par un porte-étiquette latéral fixe 17, représenté sur la figure 6. Le porte-étiquette 17 de la figure 6 est un profilé en matière plastique transparente en forme générale de C, de forme sensiblement compleméntaire des bossages 14, qui peut s'engager sur lesdits bossages 14, ledit porte-étiquette 17 ayant une nervure 18 adaptée à s'encliqueter dans les encoches 19 des bossages 14. Le porte-étiquette 17 comporte un fond 28 sensiblement parallèle à la face latérale 6, ou éventuellement incliné en s'écartant de la face latérale vers l'arrière. Le fond 28 est prolongé sensiblement à angle droit vers la réglette par une branche 30 arrière, et en biais vers la réglette et vers l'avant par une branche 27 avant, qui se termine par la nervure 18 sensiblement parallèle la face latérale 5. La branche 27 peut être reliée au fond 28 par un arrondi 29. La branche 27 pourrait éventuellement être sensiblement parallèle à la face avant de la réglette. Le porte-étiquette 17 peut avoir une longueur relativement importante, et s'étendre sur les faces latérales 5 de plusieurs réglettes à contacts 1, lorsque plusieurs réglettes à contacts ont besoin d'avoir un repérage commun. Le porte-étiquette 17 comporte une étiquette 17a, placée à l'intérieur du profilé en forme de C, contre la branche 27 du C qui est dirigée vers l'avant et contre le fond 28 du C. L'étiquette 17a est retenue par des reliefs intérieurs 25, 26. Comme précédemment, l'étiquette 17a est assez facilement lisible depuis l'avant de la réglette 1.

La réglette selon l'invention pourrait aussi comporter deux porte-étiquettes latéraux 12 rotatifs, ou deux porte-étiquettes latéraux fixes 17, sur les deux faces latérales de la réglette.

Avantageusement, le porte-étiquette frontal 13 déjà décrit peut obturer de façon sensiblement étanche la face avant de la réglette, pour éviter par exemple la pénétration de vapeur d'eau jusque sur les contacts 3.

## Revendications

1. Réglette à contacts (1), ayant deux côtés (4) de forme générale plane sensiblement rectangulaire, deux faces latérales (5, 6), une face avant (7) et une face arrière (8), ladite réglette à contacts étant adaptée à être fixée à un rail (2) par ladite face arrière (8), lesdits côtés étant perpendiculaires à la direction longitudinale du rail (2), ladite face avant (7) comportant des contacts électriques (3), ladite réglette à contact comportant un porte-étiquette latéral (12, 17) s'étendant sur une face latérale (5) et faisant un angle obtu avec la face avant pour qu'une étiquette (12a) portée par ledit porte-étiquette soit visible depuis la face avant (7) de la réglette à contact, caractérisée en ce que le porte-étiquette latéral (12, 17) comporte des moyens d'encliquetage (15, 18) à une de ses extrémités coopérant avec un organe d'encliquetage (14) prévu sur la face avant (7) à une de ses extrémités à proximité de la face latérale (5) pour monter de façon amovible ledit porte-étiquette sur la réglette.

2. Réglette à contacts selon la revendication 1, dans laquelle le porte-étiquette latéral (12) recouvre sensiblement ladite face latérale (5), et ledit porte-étiquette latéral (12) est monté rotatif autour d'un axe (14a) voisin de la face avant (7) de la réglette et perpendiculaire aux côtés (4) de la réglette.

3. Réglette à contacts selon la revendication 1 ou la revendication 2, dans laquelle la réglette à contacts comporte des organes d'encliquetage (14) identiques aux deux extrémités de sa face avant (7) à proximité des faces latérales (5, 6), ladite réglette comporte en outre un porte-étiquette frontal (13) qui recouvre la face avant (7) de la réglette et qui est doté de moyens d'encliquetage (16) coopérant avec un des organes d'encliquetage (14) pour monter de façon amovible le porte-étiquette frontal (13) sur la réglette.

4. Réglette à contacts selon la revendication 3, dans laquelle les moyens d'encliquetage (16) du porte-étiquette frontal coopèrent avec un des organes d'encliquetage (14) pour monter rotatif le porte-étiquette frontal (13) autour d'un axe (14a) perpendiculaire aux côtés (4) de la réglette.

5. Réglette à contacts, selon l'une des revendications précédentes, dans laquelle chaque organe d'encliquetage prévu à chaque extrémité de la face avant (7) comporte deux bossages identiques ayant chacun la forme d'une plaque qui s'étend parallèlement aux côtés de la réglette, lesdits deux bossages (14) formant un palier pour monter rotatif un porte-étiquette frontal (13) ou latéral (12).

6. Réglette à contacts selon la revendication 5, dans laquelle chaque bossage latéral (14) est déformable élastiquement perpendiculairement aux côtés de la réglette, et comporte un perçage (14a) pour recevoir par encliquetage un pivot (15, 16) solidaire d'un porte-étiquette frontal (13) ou latéral (12).

7. Réglette à contacts selon la revendication 3, dans laquelle ledit porte-étiquette frontal (13) obture la face avant (7) de la réglette de façon sensiblement étanche.

8. Réglette à contacts selon la revendication 1, dans laquelle ledit porte-étiquette latéral (17) est un profilé en forme générale de C, la réglette comporte un bossage latéral (14) de forme complémentaire sur au moins une de ses deux faces latérales (5, 6), au voisinage de la face avant (7), ledit porte-étiquette latéral (17) est encliqueté sur ledit bossage latéral (14) et s'étend perpendiculairement aux côtés (4) de la réglette, jusqu'au delà d'au moins un desdits côtés.

9. Réglette à contacts selon la revendication 8, dans laquelle ledit bossage latéral comporte une rainure (19) perpendiculaire aux côtés (4) de la réglette, et ledit porte-étiquette latéral (17) comporte une nervure complémentaire (18) encliquetée dans ladite rainure.

## Patentansprüche

1. Kontaktleiste (1), mit zwei Seiten (4) von allgemein ebener, im wesentlichen rechteckiger Form, zwei Lateralflächen (5, 6), einer Vorderfläche (7) und einer Hinterfläche (8), wobei diese Kontaktleiste dazu ausgelegt ist, mit der Hinterfläche (8) an einer Schiene (2) befestigt zu werden, wobei die Seiten senkrecht zur Längsrichtung der Schiene (2) sind, wobei die Vorderfläche (7) elektrische Kontakte (3) aufweist, wobei die Kontaktleiste einen lateralen Etikettenhalter (12, 17) aufweist, der sich über eine Lateralfläche (5) erstreckt und mit der Vorderfläche einen stumpfen Winkel bildet, damit ein von dem Etikettenhalter gehaltenes Etikett (12a) von der Vorderfläche (7) der Kontaktleiste her sichtbar ist, dadurch **gekennzeichnet**, daß der laterale Etikettenhalter (12, 17) an einem seiner Enden Einrastmittel (15, 18) aufweist, die mit einem auf der Vorderfläche (7) an einem ihrer Enden in der Nähe der Lateralfläche (5) vorgesehenen Einrastorgan (14) zusammenwirken, um den Etikettenhalter auf abnehmbare Weise an der Leiste zu montieren.

2. Kontaktleiste nach Anspruch 1, bei welcher der laterale Etikettenhalter (12) im wesentlichen die Lateralfläche (5) überdeckt, und wobei der laterale Etikettenhalter (12) um eine Achse (14a) schwenkbar montiert ist, die der Vorderfläche (7) der Leiste benachbart und zu den Seiten (4) der Leiste senkrecht ist.

3. Kontaktleiste nach Anspruch 1 oder Anspruch 2, bei welcher die Kontaktleiste an den zwei Enden der Vorderfläche (7) in der Nähe der Lateralflächen (5, 6) identische Einrastorgane (14) aufweist, wobei die Leiste darüber hinaus einen frontalen Etikettenhalter (13) aufweist, welcher die Vorderfläche (7) der Leiste überdeckt und welcher mit Einrastmitteln (16) ausgestattet ist, die mit einem der Einrastorgane (14) zusammenwirken, um den frontalen Etikettenhalter (13) auf abnehmbare Weise an der Leiste zu montieren.

4. Kontaktleiste nach Anspruch 3, bei welcher die Einrastmittel (16) des frontalen Etikettenhalters mit einem der Einrastorgane (14) zusammenwirken, um den frontalen Etikettenhalter (13) um eine Achse (14a) schwenkbar zu montieren, die zu den Seiten (4) der Leiste senkrecht ist.

5. Kontaktleiste nach einem der vorangehenden Ansprüche, bei welcher jedes an einem jeweiligen Ende der Vorderfläche (7) vorgesehene Einrastorgan zwei identische Vorsprünge aufweist, deren jeder die Form einer Platte hat, welche sich parallel zu den Seiten der Leiste erstreckt, wobei die beiden Vorsprünge (14) ein Lager bilden, um einen frontalen (13) oder lateralen (12) Etikettenhalter schwenkbar zu montieren.

6. Kontaktleiste nach Anspruch 5, bei welcher jeder laterale Vorsprung (14) senkrecht zu den Seiten der Leiste elastisch verformbar ist und eine Durchbrechung (14a) aufweist, um einen mit einem frontalen (13) oder lateralen (12) Etikettenhalter einstückigen Zapfen (15, 16) unter Einrastung aufzunehmen.

7. Kontaktleiste nach Anspruch 3, bei welcher der frontale Etikettenhalter (13) die Vorderfläche (7) der Leiste im wesentlichen dicht überdeckt.

8. Kontaktleiste nach Anspruch 1, bei welcher der laterale Etikettenhalter (17) ein Profil in der allgemeinen Form eines C ist, bei welcher die Leiste in der Nähe der Vorderfläche (7) einen lateralen Vorsprung (14) mit einer zu wenigstens einer ihrer beiden Lateralflächen (5, 6) komplementären Form aufweist, und bei welcher der laterale Etikettenhalter (17) an dem lateralen Vorsprung (14) eingerastet wird und sich senkrecht zu den Seiten (4) der Leiste bis über wenigstens eine dieser Seiten hinaus erstreckt.

9. Kontaktleiste nach Anspruch 8, bei welcher der laterale Vorsprung eine zu den Seiten (4) der Leiste senkrechte Nut (19) aufweist und der laterale Etikettenhalter (17) eine komplementäre Rippe (18) aufweist, die in diese Nut eingerastet wird.

## Claims

1. A terminal strip (1) having two substantially rectangular generally plane sides (4), two side faces (5, 6), a front face (7) and a back face (8), said terminal strip being adapted to be fixed to a rail (2) by said back face (8), said sides being perpendicular to the length of said rail (2), said front face (7) including electrical contacts (3), said terminal strip including a side labelholder (12, 17) extending over a side face (5) and making an obtuse angle with the front face so that a label (12a) carried by said labelholder is visible from the front face (7) of the terminal strip, characterized in that the side labelholder (12, 17) comprises snap-fastener means (15, 18) at one of its ends cooperating with a snap-fastener member (14) on the front face (7) at one of its ends near the side face (5) for removable mounting of said labelholder on the terminal strip.

2. A terminal strip according to claim 1, wherein the side labelholder (12) substantially covers said side face (5) and can pivot about an axis (14a) near the front face (7) and perpendicular to the sides (4) of the terminal strip.

3. A terminal strip according to claim 1 or claim 2, comprising identical snap-fastener members (14) at both ends of its front face (7) near the side faces (5, 6) and a front face labelholder (13) covering the front face (7) of the terminal strip and having snap-fastener means (16) cooperating with one of the snap-fastener members (14) to mount the front face labelholder (13) removably to the terminal strip.

4. A terminal strip according to claim 3, wherein the snap-fastener means (16) of the front face labelholder cooperate with one of the snap-fastener members (14) to mount the front labelholder (13) so that it can pivot about an axis (14a) perpendicular to the sides (4) of the terminal strip.

5. A terminal strip according to any preceding claim, wherein each snap-fastener member at each end of the front face (7) has two identical bosses each in the form of a plate extending parallel to the sides of the terminal strip, said bosses (14) forming a bearing on which a front labelholder (13) or a side labelholder (12) is pivoted.

6. A terminal strip according to claim 5, wherein each side boss (14) is elastically deformable perpendicularly to the sides of the terminal strip and has a hole (14a) for receiving a pivot (15, 16) snap-fastener fashion on a front labelholder (13) or on a side labelholder (12).

7. A terminal strip according to claim 3, wherein said front labelholder (13) closes off the front face (7) of the terminal strip in a substantially watertight manner.

8. A terminal strip according to claim 1, wherein said side labelholder (17) is a generally channel section bar, the terminal strip comprises a complementary-shaped side boss (14) on at least one side face (5, 6) near the front face (7), and said side labelholder (17) is snap-fastened to said side boss (14) and extends perpendicularly to the sides (4) of the terminal strip beyond at least one side.

9. A terminal strip according to claim 8, wherein said side boss comprises a notch (19) perpendicular to the sides (4) of the terminal strip and said side labelholder (17) has a complementary rib (18) snap-fastened in said notch.
